# EUROPEAN PATENT APPLICATION

(11) **EP 4 541 687 A1**
(43) Date of publication of application: **23.04.2025**
(21) Application number: 23204036.0
(22) Date of filing: 17.10.2023
(51) Int. Cl.: B61L 27/12, B61L 27/60, G06N 20/00, G06N 3/092

(54) **METHOD FOR OPERATING A TRAIN TRAFFIC MANAGEMENT SYSTEM WITH TRAIN JOURNEY SOLUTIONS PROPOSAL SYSTEM USING AN ARTIFICIAL INTELLIGENCE BASED DIGITAL TWIN AND TRAIN JOURNEY SOLUTIONS PROPOSAL SYSTEM USING AN ARTIFICIAL INTELLIGENCE BASED DIGITAL TWIN**

(71) Applicant: Hitachi Rail GTS Deutschland GmbH, 71254 Ditzingen (DE)
(72) Inventor: ADUSUMALLI, Vijaya Bhaskar, 10707 Berlin (DE); JAIN, Hardik, 10553 Berlin (DE)
(74) Representative: Kohler Schmid Möbus Patentanwälte

(57) **Abstract**

A method for operating a train traffic management system (TMS) using a train journey solutions proposal system comprises:
(a) Providing a digital twin (DT), a simulation model (M) and an artificial intelligence trained machine (AI);
(b) Providing train operational rules for the train network;
(c) Providing a real-time network status of the train network;
(d) Detecting deviations from a planned operational timetable for a particular train journey;
(e) Determining solutions for the train journey by simulating alternative options by using the simulation model (M), wherein the digital replica environment is updated in real time using the real time network status;
(f) Outputting a list of solutions comprising actions and recommendations,
(g) Selecting one of the listed solution
(h) In case the selected solution is feasible: Executing the selected solution,
wherein the solutions and/or the alternative options for the train journey are validated according to train operating rules specified by a user of the train journey solutions proposal system.

## Description

### Background of the invention

The invention concerns a method for operating a train traffic management system using a train journey solutions proposal system and a planned operational timetable for a train network, wherein the operational timetable comprises planned train journeys. The invention also concerns a train journey solutions proposal system for use with a train traffic management system with a planned operational timetable for a train network.

A method for controlling vehicles in case of a conflict situation and decision support system is known from [Markgraf 2020].

During operation of a transportation system, in particular with rail bound vehicles, conflict situations may occur, e.g. due to non-working switches, blocked tracks, defect trains, etc. Conflict situations have to be solved as quickly as possible in order to continue the operation of a transportation system. In order to solve an original conflict situation, suitable measures are applied. Yet, by applying such measures, subsequent conflicts may occur. For enhancing traffic capacity, it is important to find a solution to solve the conflicts and subsequent conflicts.

The idea of enhancing traffic capacity has gained a lot of attention in the railway domain. Traditionally, this problem was solved manually by relying on the operator's experience. However, with the increase in the network complexity, such a manual solution is no longer possible or safe enough. Recently, various learning based methods, e.g. [Markgraf 2020] and [Yang 2021], have been proposed to solve this problem. These solutions utilize reinforcement learning technique by relying on simulated data for training the agents. Their idea of optimization is based on the thought that a delay in one train can have a domino effect on other trains and thus the whole infrastructure. [Markgraf 2020] and [Yang 2021] try to incorporate observation state of a train during learning of the model. [Markgraf 2020] focuses on train control with recommended actions. A determined conflict situation is classified by assigning the actual operation state to a conflict class thereby determining an action space in dependence of the conflict class to which the actual operation state has been assigned, wherein the action space comprises allowed measures. However, the influences of the solutions on the elements of the network can only be determined to a limited extent, since the conditions of the elements change dynamically.

Efforts have been made to create digital twins for various applications ranging from medical to transportation, and even rail transport. [Dimitrova 2021] proposed a digital twin for railway infrastructure containing track information, targeting railway maintenance without providing a concrete idea for the implementation of this digital twin [Zhang 2021] extended the idea of digital twins to incorporate artificial intelligence algorithms for enhanced equipment health management. Their work proposed to use different supervised learning techniques to train the AI models. One of the latest work in this direction is [Ferdousi 2022] that provides a conceptualized framework for designing a digital twin for railway asset monitoring and asset state prediction. Even though the [Ferdousi 2022] contains an AI engine, the scope of this engine is limited to asset inspection. [Yang 2022] identified that a change in the operation environment could deteriorate the performance of supervised models, and proposed using transfer learning to develop lifetime robust model for digital twin systems. This idea is still restricted to maintenance due to safety and efficiency reasons.

### Object of the invention

Object of the invention is to provide a method that offers solutions better adapted to the actual conditions and which preferably allows to take into account clear consequences on additional parameters of network elements.

### Description of the invention

This object is solved by a method according to claim 1 and a train journey solutions proposal system according to claim 13.

The inventive method comprises the following method steps:
(a) Providing a digital twin which is a digital replica environment of a rail infrastructure and comprises a digital replica of the physical infrastructure of the train network, a simulation model and an artificial intelligence trained machine;
(b) Providing train operational rules for the train network;
(c) Providing a real-time network status of the train network;
(d) Detecting deviations from the planned operational timetable for a particular train journey;
(e) Determining solutions for the train journey by simulating alternative options for the train journey in the digital replica of the physical infrastructure of the train network by using the simulation model of the digital twin, wherein the digital replica environment is updated in real-time using the real-time network status;
(f) Outputting a list of solutions comprising actions and recommendations,
(g) Selecting one of the listed solution;
(h) In case the selected solution is feasible: executing the selected solution;

According to the invention, the solutions are validated according to the provided train operating rules.

The method according to the invention uses a digital twin of a rail infrastructure to optimize rail operations and enhance traffic.

The digital twin is a digital replica environment of a rail infrastructure and comprises a **digital replica** of the physical infrastructure of the train network in form of a high definition safe digital map of the infrastructure of the train network as a "Single Source of Truth". The digital twin comprises in particular **static infrastructure information,** such as information about tracks, switches, signals, train detection systems, bridges, tunnels, track geometry specifying their physical location and key attributes.

The proposed digital twin is capable of receiving **real-time information** of the ***network status*** of the train network (i.e. information about hardware elements (assets) of the train network, such as trains, tracks, points, signals, catenary, level crossings as well as information about external conditions of influence such as weather data, obstacles on track like vegetation or rocks or snow or floods). Thus, real-time information (in particular information concerning track situation, train status including accurate positioning, occupied tracks, infrastructure status etc.) is provided to the digital twin. The digital twin is configured to determine delays in the current operating conditions. The transmission of the real-time network status can be continuous or periodic, or triggered by a status change, and is always available in the digital twin. The real-time network status is provided using various means, e.g. by employing additional sensors on the assets and on the track infrastructure.

In addition, the digital twin comprises at least one **simulation model,** wherein the simulation model preferably comprises a **train model** with physical characteristics of the trains such as length, mass, breaking capacity, etc.

The digital replica further comprises an **artificial intelligence trained machine** configured for resolving train traffic conflicts, removing invalid solutions, prioritizing validated solutions, and automatically learning the user solution selection behavior using reinforcement learning. Several future possible train conflict and train traffic scenarios can be predicted based on a trained AI model.

The method according to the present invention can consider parameters like real-time parameters, like traffic, energy consumption, passenger comfort in a rail signalling area of responsibility and thus enabling proposing better solutions which are adapted to current conditions and/or more accurate indication of consequences. Thus, the method according to the invention allows more parameters to be taken into account in the solution than in conventional methods.

The operational rules are specified by a user of the train journey solutions proposal system and concern e.g. train operating speed throughout the journey, train priorities in case of conflicts, etc.

The **real-time network status** of the train network can be provided by using various means, in particular by employing additional sensors on the assets and on the track infrastructure. The real-time network status can be provided via communication channels or via manual input.

The **deviation from the planned operational timetable** is obtained by determination of an actual operation state of trains for which the timetable applies.

The real-time network status can be provided prior to or after detection of a deviation from the planned operational timetable.

The **simulation model** for simulating alternative options for the train journey is preferably generated using artificial intelligence.

The selection of a solution from the outputted list of solutions can be done by a dispatcher. Each solution comprises a set of actions.

A selected solution is considered to be feasible if selection is performed within a given time window after the list is output. If the selection of the solution is delayed substantially (beyond the given time window) the solution is considered to be "not feasible", because the traffic status may have changed.

The digital twin of real-time central train traffic management system is a powerful simulation and operational environment assisting the rail Dispatcher responsible for a rail traffic region of significant size in a country. The Dispatcher gets an option to ask the Digital Twin for assistance to resolve delays and conflicts at a given area of responsibility such as a busy train station. Inside the digital twin is reinforcement learning based artificial intelligence trained engine that solves the problem with a recommendation in the form of a set of actions that a dispatcher can take or a train driver can take.

A conflict can be avoided and the operational timetable can be maintained by making the train drive faster or slower or depart late or change the routing.

In case the selected solution is not feasible it is preferred to request a new solution, wherein method steps c) to h) are repeated.

In a preferred variant of the inventive method information concerning which solution has been selected and or which solution has been executed is fed back to the artificial intelligence trained machine of the digital twin. This feedback is remembered by the artificial intelligence trained machine for future recommendations.

It is highly preferred that the simulation model is adapted with respect to the information regarding which selection has been made that are fed back to the artificial intelligence trained machine. I.e. the feedback is remembered by the train journey solutions proposal system for future recommendations.

In a highly preferred variant of the inventive method, the artificial intelligence trained machine of the digital twin, discards solutions that are not feasible or viable. i.e. the artificial intelligence trained machine is configured to discard and prioritize solutions. Thus, the outputted list does not contain the discarded solutions. The discarding is preferably based on a configuration provided by the dispatcher.

The validation according to train operating rules specified by the user (operational validation) can be performed for the simulated solutions (i.e. after simulation) or for the alternative options (i.e. prior to simulation). The alternative options or the simulated solutions are validated in order to comply with consumer rules, country rules, and restriction areas. In case of validation of the alternative options, only alternative options that comply with consumer protection regulations, for example, are allowed for simulation.

In another special variant, a further validation (namely a validation with respect to safe train operation) is performed for the selected solution after step (g). The selected solution is validated in order to be compatible with the actual external constrains, e.g. weather. This kind of validation is called "infrastructure validation".

In a highly preferred variant, the outputted solutions comprise information concerning consequences and/or a cost factor, wherein weighting parameters for the cost factor are preferably preset by the dispatcher prior to the simulation. Consequences can comprise e.g. information concerning Follow-up conflicts. Weighting parameters might be e.g.: energy optimized, sticking to the time or keeping the next connection.

Without digital twin there are only little possibilities to simulate the consequences. The digital twin gives impact details on KPIs including a possibility to execute the selected scenarios (alternative options) in a simulation environment with most up to date data before executing a final selection in real world.

The alternative options for simulation are preferably chosen using a heuristic based learning algorithm.

In a special variant, in step (c) the real-time network status is provided using manual input. Manual input is used to generate a large dataset for different scenario, such as a network region failure due to signals, point machines, etc.

The system response (i.e. the outputted list of solutions) on the manually input real-time network status can be used to generate a knowledge base for training the artificial intelligence machine. A variety of realistic and futuristic scenarios can be provided as the input.

Further, the manual input real-time network status can be used to stress test the network by performing steps (d) - (f). For stress test steps (g) and (h) are omitted. A stress test tests the impact of various adverse situations on train traffic. It tests TMS ability to plan, replan, cancel, add trains and resulting impact on passengers.

The invention also concerns a train journey solutions proposal system for use with a train traffic management system with a planned operational timetable for a train network. According to the invention the train journey solutions proposal system comprises a digital twin, which is a digital replica environment of a rail infrastructure comprising a digital replica of the physical infrastructure of the train network, a simulation model and an artificial intelligence trained machine.

The artificial intelligence trained machine is configured to solve a problem (deviation from time-table) with a recommendation in the form of a set of actions, the set of actions forming a solution. Additional computing resources need to be provided to feed data to the digital replica.

The artificial intelligence trained machine is preferably based on reinforcement learning. Where, the knowledge bank of historic train traffic data is used to train the machine.

The reinforcement learning based artificial intelligence trained machine is also configurable to prioritize solutions based on past user selections.

The digital replica environment is preferably configured to simulate conflicts and/or stress tests. Thus, it can be used for conflict solutions during operation of a train and/or to perform stress test of the network.

The train journey solutions proposal system preferably comprises sensors for measuring parameters for the real-time network status, wherein the sensors are integrated in an internet of things.

The train journey solutions proposal system according to the invention is preferably configured to perform the method described above.

Further advantages of the invention can be seen from the description and the drawing. Likewise, the above-mentioned and the still further described features can be used according to the invention in each case individually or as a plurality in any desired combination. The embodiments shown and described are not to be understood as a conclusive list, but rather have an exemplary character for the description of the invention.

### Detailed description of the invention and drawing

- Fig. 1: shows the method steps (c) - (h) of the method according to the invention.
- Fig. 2: shows the handling of alternative options during the method according to the invention.
- Fig. 3: shows a train journey solutions proposal system according to the invention.

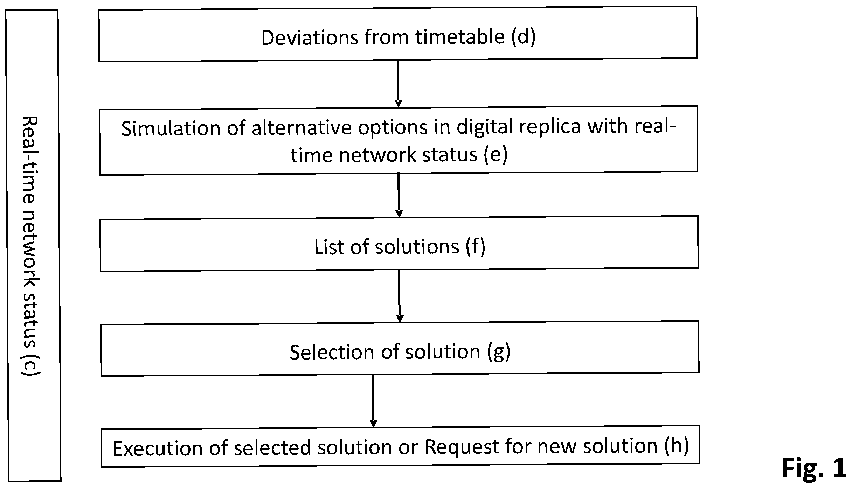

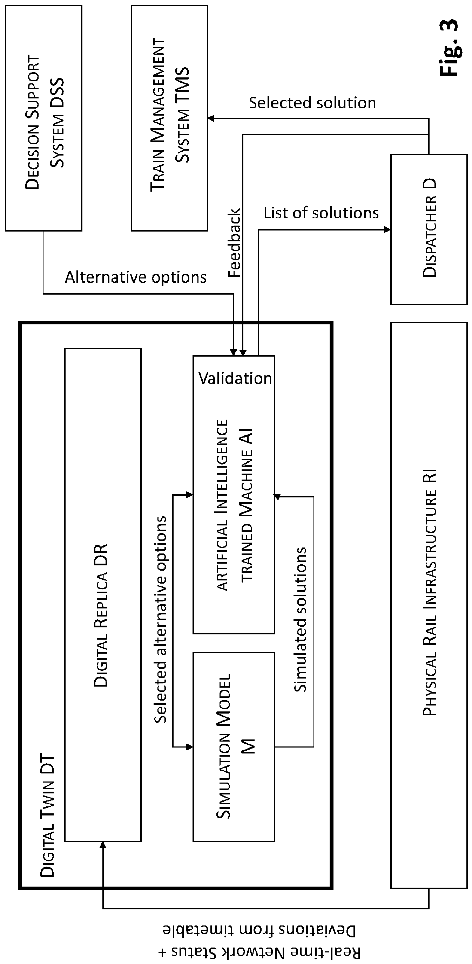

**Fig. 1** shows the method steps (c) - (h) of the method according to the invention, which is performed by a train journey solutions proposal system shown in **Fig. 3****.**

A train traffic management system **TMS** provides a planned operational timetable for a train network comprising information concerning train journeys. Deviations from the timetable are detected by comparing a target train position with the real-time train position in step (d). According to the invention, alternative options for the train journey are simulated by a digital twin DT of the physical infrastructure of the train network (rail infrastructure **RI**) in step (e) using a simulation model **M** and a digital replica, both integrated in the digital twin DT. The result of the simulation is a list of solutions (step (f)), each solution comprising a set of actions (e.g. Slow speed for train A, points change, track change for train B, etc.) which is output. A dispatcher **D** selects one of the output solution in step (g), which can then be executed by the train traffic management system **TMS.**

According to the invention, the digital replica DR is updated in real-time by providing real-time network status of the physical rail infrastructure RI to the digital replica. Any delay can then be calculated by the digital replica DR. According sensors and transmission devices are provided for this purpose. The digital twin DT evaluates and provides the consequences of choosing any one of the solutions. Therefore, the simulation is always based on current conditions.

In step (f), the solutions are preferably output with cost information, e.g. in the form of business impacts or impact on Service Level Agreements to be maintained by the train operator. For example, the digital twin DT suggests a solution based on energy optimized or a solution based on sticking to the time or a solution based on keeping the next connection.

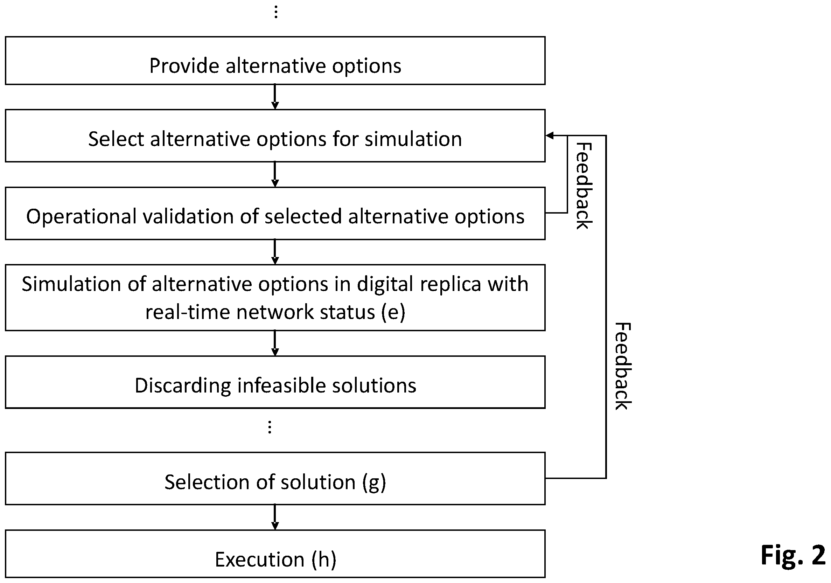

The digital twin DT further comprises an artificial intelligence trained machine **AI.** The artificial intelligence trained machine AI gives recommendations by selecting alternative options (see **Fig. 2**) for simulation (step (e)) using the simulation model. The alternative options can be provided e.g. by a decision support system **DSS.** Prior to simulation, it is advisable to perform an operational validation in order to ensure that the alternative option complies with the train operating rules specified by the user. Alternatively or in addition, the operational validation can be performed on the simulated solution (not shown), i.e. after simulation (step (e)) but prior to output of the list of solutions (step (f)).

Prior to output of the list of solutions (step (f)), the artificial intelligence trained machine preferably discards solutions that are suboptimal as per the configuration provided by the dispatcher D.

Once the Dispatcher D selects a solution in step (g), the same is then forwarded to the Operational Train Traffic Management System TMS to execute the action (step (h)). Digital Twin will soon get the status of train from real-time positioning and has the possibility to detect new conflicts for the rest of the train journey. Information concerning executed solution is fed back to the artificial intelligence trained machine AI.

Without Digital Twin, the dispatcher has little opportunity to simulate the consequences. The Digital Twin provides details on the impact on KPIs and offers the possibility to execute the selected scenarios in a simulation environment with the most up-to-date data before making a final selection.

The inventive use of a digital replica DR of the physical rail infrastructure updated in real-time enables the simulation of various scenarios, from simple conflicts to stress tests. The artificial intelligence based digital twin DT continuously learns in the training phase as well as during operation by taking advantage of standardized railway system architecture to obtain real-time network status and feed this information to the algorithm in order to enable to filter out possible but not feasible solutions dynamically. The large amount of data collected during such simulations can be used to train the artificial intelligence machine AI, so that conflicts and their effects can be predicted far in advance. The inventive train journey solutions proposal system is able to create low cost high impact solution to increase the rail network capacity without spending large capital expenditure expansion of the new lines.

The proposed invention would for example leverage the recovery of operational timetable before introduction of new ETCS levels that remove block signals. Today, the concept of block signal enforces significant restrictions to the rail capacity. By becoming aware of the real-time train position, the potential blocks ahead in every region and possibilities to deconflict every scenario will continuously reduce the stress on traffic, removes bottlenecks in traffic congestion and allows smooth adherence to the timetable. The use of the proposed invention is not limited to ETCS. Rather, the method and train journey solutions proposal system according to the invention can be used also for other applications, such as traditional fixed block by foreseeing a dead-lock and avoiding waiting at signals, thereby saving energy.

### List of reference signs

- AI: Artificial Intelligence trained Machine
- D: Dispatcher
- DR: Digital Replica
- DSS: Decision Support System DSS
- DT: Digital Twin
- M: Simulation Model
- RI: Physical Rail Infrastructure
- TMS: Train Traffic Management System

### Literature list

[Markgraf 2020] EP 3 213 974 B1
[Yang 2022] Lifetime Learning-enabled Modelling Framework for Digital Twin 2022 IEEE 18th International Conference on Automation Science and Engineering (CASE) DOI: 10.1109/CASE49997.2022.9926693
[Yang 2023] A Parallel Intelligent System for Optimizing High-Speed Railway Rescheduling by Learning
   2021 IEEE 1st International Conference on Digital Twins and Parallel Intelligence (DTPI)
   DOI: 10.1109/DTPI52967.2021.9540209
[Zhang 2021] PHM of Rail Vehicle Based on Digital Twin
   2021 Global Reliability and Prognostics and Health Management (PHM-Nanjing)
   DOI: 10.1109/PHM-Nanjing52125.2021.9613068
[Dimitrova 2021] Digital Twins: An Advanced technology for Railways Maintenance Transformation 2021 13th Electrical Engineering Faculty Conference (BulEF) DOI: 10.1109/BulEF53491.2021.9690822
[Ferdousi 2022] RailTwin: A Digital Twin Framework For Railway
   2022 IEEE 18th International Conference on Automation Science and Engineering (CASE)
   DOI: 10.1109/CASE49997.2022.9926529

## Claims

1. Method for operating a train traffic management system (TMS) using a train journey solutions proposal system and a planned operational timetable for a train network, wherein the operational timetable comprises planned train journeys,
the method comprising:
(a) Providing a digital twin (DT) which is a digital replica environment of a rail infrastructure (RI) and comprises a digital replica (DR) of the physical infrastructure (RI) of the train network, a simulation model (M) and an artificial intelligence trained machine (AI);
(b) Providing train operational rules for the train network;
(c) Providing a real-time network status of the train network;
(d) Detecting deviations from the planned operational timetable for a particular train journey;
(e) Determining solutions for the train journey by simulating alternative options for the train journey in the digital replica (DR) of the physical infrastructure (PI) of the train network by using the simulation model (M) of the digital twin (DT), wherein the digital replica environment is updated in real time using the real time network status;
(f) Outputting a list of solutions comprising actions and recommendations,
(g) Selecting one of the listed solution
(h) In case the selected solution is feasible: Executing the selected solution,
wherein the solutions and/or the alternative options for the train journey are validated according to train operating rules specified by a user of the train journey solutions proposal system;

2. Method according to claim 1, **characterized in that** in case the selected solution is not feasible: requesting a new solution, wherein method steps c) to h) are repeated.

3. Method according to claim 1 or 2, **characterized in that** information concerning which solution has been selected and or which solution has been executed is fed back to the artificial intelligence trained machine (AI) of the digital twin (DT).

4. Method according to claim 3, **characterized in that** the simulation model (M) is adapted with respect to the information which selection has been made that are fed back to the artificial intelligence trained machine (AI).

5. Method according to one of the preceding claims, **characterized in that** the artificial intelligence trained machine (AI) of the digital twin (DT), discards solutions that are not feasible or viable.

6. Method according to one of the preceding claims, **characterized in that** a further validation of solutions with respect to safe train operation is performed for the selected solution after step (g).

7. Method according to one of the preceding claims, **characterized in that** the outputted solutions comprise information concerning consequences and/or a cost factor, wherein weighting parameters for the cost factor are preferably preset by the dispatcher (D) prior to the simulation.

8. Method according to one of the preceding claims, **characterized in that** the alternative options for simulation are chosen using a heuristic based learning algorithm.

9. Method according to one of the preceding claims, **characterized in that** in step (c) the real-time network status is provided using manual input.

10. Method according to claim 9, **characterized in that** the real-time network status is used to generate a knowledge base for training the artificial intelligence machine (AI) .

11. Method according to claim 9 or 10, **characterized in that** the manual input real-time network status is used to stress test the network by performing steps (d) - (f).

12. Train journey solutions proposal system for use with a train traffic management system (TMS) with a planned operational timetable for a train network, the train journey solutions proposal system comprising a digital twin (DT), which is a digital replica environment of a rail infrastructure (PI) comprising a digital replica (DR) of the physical infrastructure (RI) of the train network, a simulation model (M) and an artificial intelligence trained machine (AI).

13. Train journey solutions proposal system according to claim 12, **characterized in that** the artificial intelligence trained machine (AI) is based on reinforcement learning.

14. Train journey solutions proposal system according to claim 12 or 13, **characterized in that** the digital replica environment is configured to simulate conflicts and/or stress tests.

15. Train journey solutions proposal system according to one of the claims 12 to 14, further comprising sensors for measuring parameters for the real time network status, wherein the sensors are integrated in an internet of things.

16. Train journey solutions proposal system according to one of the claims 12 to 15, configured to perform the method according to one of the claims 1 to 11.
